# EUROPÄISCHE PATENTSCHRIFT

(11) **EP 3 665 395 B1**
(45) Veröffentlichungstag und Bekanntmachung des Hinweises auf die Patenterteilung: **06.09.2023**
(21) Anmeldenummer: 18752700.7
(22) Anmeldetag: 31.07.2018
(51) Int. Cl.: F16B 2/24, F16L 3/123, H02G 3/32, F16B 5/06

(54) **SCHELLE ZUM BEFESTIGEN EINES ROHR- ODER SCHLAUCHFÖRMIGEN GEGENSTANDS**
CLIP FOR FASTENING A PIPE-SHAPED OR TUBE-SHAPED OBJECT
COLLIER POUR LA FIXATION D'UN OBJET TUBULAIRE

(30) Priorität: 08.08.2017 DE 102017118047
(43) Veröffentlichungstag der Anmeldung: 17.06.2020
(73) Patentinhaber: NORMA Germany GmbH, 63477 Maintal (DE)
(72) Erfinder: GEPPERT, Helmut, 63791 Karlstein (DE); SCHMIDT, Frank, 63505 Langenselbold (DE); LANTSMANN, Natan, 36039 Fulda (DE); SOMMER, Michael, 63654 Büdingen (DE)
(74) Vertreter: Patentanwälte Olbricht Buchhold Keulertz
(86) Internationale Anmeldenummer: PCT/EP2018/070800
(87) Internationale Veröffentlichungsnummer: WO 2019/030065

(56) Entgegenhaltungen:
- DE-B3-102006 003 448
- GB-A- 573 701
- US-A- 2 338 658
- US-A- 3 368 780
- US-A- 5 511 288

## Beschreibung

Die vorliegende Erfindung betrifft eine Schelle mit einem Schellenband, das an seinem ersten Ende einen ersten Schenkel und an seinem zweiten Ende einen zweiten Schenkel aufweist, wobei die Schenkel im verspannten Zustand des Schellenbandes aneinander anliegen und ein Schenkelpaar bilden und die Schelle ein Clipelement mit einem Aufnahmeabschnitt aufweist, in dem das Schenkelpaar im verspannten Zustand des Schellenbandes einführbar ist.

Hauptmerkmale der Erfindung sind im kennzeichnenden Teil des Hauptanspruchs angegeben. Ausgestaltungen sind Gegenstand der Ansprüche 2 bis 10.

### STAND DER TECHNIK

DE 10 2006 020 407 B3 betrifft eine Schelle zum Befestigen eines rohr- oder schlauchförmigen Gegenstandes an einer Unterlage mit einem Schellenmantel, von dessen einem Ende ein erster Schenkel und von dessen anderem Ende ein zweiter Schenkel nach außen absteht, die im geschlossenen Zustand der Schelle aneinander anliegen. Im geöffneten Zustand weist der erste Schenkel mindestens eine in Richtung auf den zweiten Schenkel herausstehende Lasche und der zweite Schenkel einen Befestigungsabschnitt auf, der in eine Lücke zwischen der Lasche und einem der Lasche gegenüberliegenden Nachbarbereich des ersten Schenkels einführbar ist. Im geschlossenen Zustand ist die Lasche plastisch auf die vom ersten Schenkel abgewandte Außenseite des Befestigungsabschnitts umgeformt, wodurch die beiden Schenkel aneinander gehalten werden. Eine endgültige Fixierung der Schelle erfolgt dann zum Beispiel mittels einer Schraube, die durch eine Durchgangsöffnung beider Schenkel hindurch mit einem gewünschten Gegenstand verschraubt wird.

Diese bekannte Lösung ist grundsätzlich zufriedenstellend. Allerdings hat sich herausgestellt, dass hinsichtlich einer einfachen und schnellen Befestigung der Schelle Verbesserungspotenzial besteht.

Weitere Schellen der oben genannten Art sind aus der DE 10 2006 003 448 B3 sowie der US 5 511 288 A bekannt.

### OFFENBARUNG DER ERFINDUNG

Aufgabe der Erfindung ist nun die Bereitstellung einer Schelle, die eine Befestigung von rohr- oder schlauchförmigen Elementen mit geringem Aufwand ermöglicht. Dabei sollen die Nachteile des Stands der Technik beseitigt werden. Insbesondere soll eine Befestigung ohne zusätzliche Befestigungsmittel möglich sein.

Die genannte Aufgabe wird durch eine Schelle mit den Merkmalen des Anspruchs 1 gelöst.

Vorteilhafte Ausgestaltungen finden sich in den Ansprüchen 2 bis 10.

Bei einer Schelle zum Befestigen eines rohr- oder schlauchförmigen Gegenstands, mit einem Schellenband, welches an seinem ersten Ende einen ersten Schenkel und an seinem zweiten Ende einen zweiten Schenkel aufweist, wobei die Schenkel im verspannten Zustand der Schelle aneinander anliegen und ein Schenkelpaar bildenund die Schelle ein Clipelement mit einem Aufnahmeabschnitt aufweist, in welchen das Schenkelpaar im verspannten Zustand des Schellenbandes einführbar ist, wobei das Clipelement mittels eines Rastmechanismus' im Aufnahmeabschnitt mit dem Schenkelpaar verrastbar ist, wobei das Clipelement einen Befestigungsabschnitt mit einem Befestigungsraum zum Befestigen der Schelle an einem Element aufweist und dass der Aufnahmeabschnitt einen Aufnahmeraum (8) zum Aufnehmen des Schenkelpaares aufweist, wobei der Aufnahmeabschnitt des Clipelements eine Grundfläche, einen Rasthaken und eine Einführungsöffnung aufweist, wobei an den Längsseiten der Grundfläche des Aufnahmeabschnitts Führungselemente ausgebildet sind, wobei die Führungselemente freie Enden aufweisen, welche derart rechtwinklig umgebogen sind, dass sie zueinander zeigen, wobei die Führungselemente mit den freien Enden und der Grundfläche des Aufnahmeabschnitts den Aufnahmeraum ausbilden Dabei ist erfindungsgemäß vorgesehen, dass der Befestigungsraum zwischen der Grundfläche des Befestigungsabschnitts und den freien Enden der Führungselemente des Aufnahmeabschnitts ausgebildet ist.

Diese vorteilhafte Ausgestaltung ermöglicht eine einfache Anordnung des Clipelements an der Schelle, wobei das Clipelement gleichzeitig ein ungewolltes Öffnen der Schelle verhindert. So kann insbesondere durch den Rastmechanismus auf weitere Befestigungselemente wie zum Beispiel Schrauben oder Klemmen verzichtet werden. Dabei kann das Clipelement das Schenkelpaar wenigstens abschnittsweise formschlüssig umgreifen und so die in den Aufnahmeabschnitt eingeführten Schenkel zuverlässig aneinander sichern. Für eine lange Lebensdauer ist dabei das Clipelement vorteilhafterweise relativ starr und belastbar ausgebildet, wofür es beispielsweise aus einem Metall oder aus einem vergleichbaren Kunststoff gebildet sein kann.

Ein Vorteil dieser erfindungsgemäßen Ausgestaltung des Befestigungsraums liegt darin, dass die freien Enden der Führungselemente nun gleichermaßen auf jeweils einer Seite als Abschluss des Aufnahme- sowie des Befestigungsraums fungieren, wodurch sich die Stabilität und somit die Steifigkeit des Clipelements erhöht. Darüber hinaus lässt sich durch diese Ausgestaltung Material bei der Herstellung des Clipelements einsparen.

Dass das Clipelement einen Befestigungsabschnitt mit einem Befestigungsraum zum Befestigen der Schelle an einem Element aufweist und dass der Aufnahmeabschnitt einen Aufnahmeraum zum Aufnehmen des Schenkelpaares aufweist, ermöglicht auf einfache Art und Weise ein sicheres Anbringen der Schelle an einem gewünschten Element, beispielsweise einer Fahrzeugkarosserie oder einem Träger. Insbesondere erlauben der Befestigungsraum und der Aufnahmeraum eine unkomplizierte Handhabe des Clipelements, wobei sowohl die Befestigung des Clipelements an der Schelle als auch das Anbringen des Clipelements am Element werkzeuglos erfolgen kann, indem die Schenkel in den Aufnahmeraum und zumindest ein Teil des Elements wie beispielsweise eine abstehende Lasche in den Befestigungsraum eingeführt werden und dort verrasten und/oder kraftschlüssig gehalten werden. Damit ist die Schelle werkzeuglos um ein rohr- oder schlauchförmiges Element spannbar und an einem weiteren Element festlegbar.

Die Grundfläche wird beispielswiese durch eine einteilige Metall- oder Kunststoffplatte gebildet, welche mit dem Schenkelpaar zumindest abschnittsweise in Überdeckung gebracht werden kann. Das optionale Zungenelement und die Führungselemente können materialeinheitlich an der Grundfläche angeordnet sein, also einstückig mit dieser ausgebildet sein. Diese erfindungsgemäße Weiterbildung gewährleistet eine hohe Stabilität des Aufnahmeabschnitts und eine einfache Herstellung. Das erste Zungenelement ist gegebenenfalls dazu vorgesehen, die Einführung des Schenkelpaares in den Aufnahmeabschnitt bzw. in den Aufnahmeraum zu erleichtern. Die Führungselemente dienen dabei einerseits zur Führung des Schenkelpaares zum Rastmechanismus und andererseits zur lateralen Fixierung des Schenkelpaares im Aufnahmeabschnitt. Ein derartig ausgestalteter Aufnahmeabschnitt ermöglicht es dem Clipelement, das Schenkelpaar formschlüssig und stabil aufzunehmen.

Ein besonderer Vorteil ergibt sich daraus, dass die Führungselemente freie Enden aufweisen, welche derart rechtwinklig umgebogen sind, dass sie zueinander zeigen. Die Führungselemente bilden zusammen mit den freien Enden und der Grundfläche des Aufnahmeabschnitts den Aufnahmeraum aus. Diese Form der Führungselemente hat zur Folge, dass der Aufnahmeraum des Clipelements das Schenkelpaar zumindest abschnittsweise von allen Seiten umgreifen kann, also auch an der Seite, die von der Grundfläche des Aufnahmeabschnitts abgewandt ist. Diese Ausgestaltung sorgt für eine formschlüssige Fixierung des Clipelements am Schenkelpaar.

Gemäß einer weiteren Ausgestaltung ist der Rasthaken in den Aufnahmeraum gerichtet. Das optionale erste Zungenelement kann dabei vom Aufnahmeraum weg gerichtet sein. Der Rasthaken kann dabei materialeinheitlich mit der Grundfläche verbunden sein, wobei er insbesondere als Teilausschnitt aus der Grundfläche herausgeklappt ist und in den Aufnahmeraum hineinragt. Ein derartig ausgebildeter Rasthaken hat den Vorteil, dass er mit einer komplementären Rastgeometrie des im Aufnahmeraum aufgenommenen Schenkelpaars auf einfache Weise einen Rastmechanismus bildet, der keine zusätzlichen Teile erfordert. Die komplementäre Rastgeometrie hat dabei insbesondere die Form einer Rastlasche oder einer Ausnehmung. Der Rastmechanismus gewährleistet eine schnelle, einfache und sichere Fixierung der Schelle am Clipelement, wobei auf zusätzliche Befestigungsmittel, wie zum Beispiel Schrauben, Klemmen oder ähnliches, verzichtet werden kann. Gegebenenfalls kann eine in den Schenkeln für Schrauben vorgesehene Durchgangsöffnung auch als komplementäre Rastgeometrie dienen, in die der Rasthaken einhaken kann. Die Ausbildung eines ersten Zungenelements kann dabei auf vorteilhafte Weise das Einführen des Schenkelpaares in den Aufnahmeabschnitt beziehungsweise in den Aufnahmeraum des Clipelements erleichtern, indem es in Art einer Einführhilfe den Aufnahmeraum im Bereich seiner Öffnung erweitert wird.

Eine besonders bevorzugte Ausgestaltung besteht darin, dass der Befestigungsabschnitt des Clipelements mindestens eine Lasche und gegebenenfalls ein zweites Zungenelement aufweist. Dabei zeigt die mindestens eine Lasche in Richtung des Befestigungsraums und das optionale zweite Zungenelement kann vom Befestigungsraum weg gerichtet sein. Über einen solchen Befestigungsabschnitt lässt sich eine zuverlässige Befestigung des Clipelements an einem entsprechenden Element erzielen. Insbesondere sorgt die Lasche für eine bessere Fixierung des Clipelements an einem zumindest teilweise in den Befestigungsraum eingeführten Element und erschwert ein unbeabsichtigtes Lösen. Die zweite Zunge, welche sich gegebenenfalls an der Öffnung des Befestigungsraums befindet und von diesem weggerichtet ist, sorgt als Art Einführhilfe für ein leichteres Einbringen des Clipelements an dem dafür vorgesehenen Element, weil sie den Öffnungsbereich vergrößert.

Eine Variante der Erfindung sieht ferner vor, dass das Clipelement zwischen dem Befestigungsabschnitt und dem Aufnahmeabschnitt derart u-förmig gebogen ist, dass der Befestigungsabschnitt und der Aufnahmeabschnitt im Wesentlichen parallel nebeneinander angeordnet sind. Diese Ausgestaltung des Clipelements hat den Vorteil, dass der Befestigungs- und der Aufnahmeabschnitt mit ihren Öffnungen in dieselbe Richtung zeigen. Durch diese Variante kann auf eventuelle Platzprobleme reagiert werden, welche bei der Befestigung eines rohr- oder schlauchförmigen Gegenstands an einem Element bestehen können.

Ein weiterer Vorteil ergibt sich daraus, dass die mindestens eine Lasche an der Grundfläche des Befestigungsabschnitts angeordnet ist. Eine Lasche kann auf das zumindest teilweise in den Befestigungsraum eingeführte Element auf einfache Weise eine relativ hohe Klemmwirkung ausüben und so für einen sicheren Halt des Clipelements mit der Schelle an dem Element sorgen. Es kann außerdem vorgesehen sein, dass das Element eine mit der Lasche korrespondierende Befestigungsgeometrie aufweist, in die die Lasche eingreift. Die Grundfläche des Befestigungsabschnitts des Clipelements kann dabei insbesondere als Metall- oder Kunststoffplatte ausgebildet sein, von der aus eine oder mehrere Laschen in den Befestigungsraum hineinragen.

Eine vorteilhafte Weiterbildung sieht vor, dass der Befestigungsabschnitt des Clipelements als u-förmiger Umgriff mit einem Grundschenkel und einem Außenschenkel ausgebildet ist, wobei Grund- und Außenschenkel den Befestigungsraum begrenzen. Hinsichtlich räumlicher Vorgaben des Befestigungsorts ist diese Ausführungsform vor allem von Vorteil, wenn die Öffnung des Befestigungsabschnitts und die Öffnung des Aufnahmeabschnitts in unterschiedliche Richtungen zeigen müssen, insbesondere aufeinander zu. In einem solchen Fall lässt sich durch einen erfindungsgemäß ausgestalteten Befestigungsabschnitt mit einem Außenschenkel und einem Grundschenkel ebenfalls ein Befestigungsraum bereitstellen, welcher eine verbesserte Befestigung des Clipelements und somit der Schelle an einem Element bewirkt.

Vorzugsweise ist vorgesehen, dass der Grundschenkel und der Außenschenkel im Bereich der Befestigungsöffnung näher beieinanderliegen als im Bereich des u-förmigen Umgriffs. Diese Form sorgt für eine verbesserte Klemmwirkung des Befestigungsraums, weil durch sie die Spannung auf ein zwischen Außen- und Grundschenkel zumindest teilweise eingeführtes Element erhöht wird, woraus sich wiederum eine höhere Spannkraft des Befestigungsabschnitts ergibt.

Konstruktiv ist es günstig, dass die mindestens eine Lasche am Außenschenkel des Befestigungsabschnitts angeordnet ist. Ein derart ausgestalteter Befestigungsabschnitt sorgt für eine Verbesserung der Fixierung des Clipelements an einem Element. Dazu kann vorgesehen sein, dass das Element zum Beispiel eine korrespondierende Befestigungsgeometrie aufweist, mit der die Lasche des Befestigungsabschnitts verrastet werden kann.

Weitere, die Erfindung verbessernde Maßnahmen werden nachstehend gemeinsam mit der Beschreibung zweier bevorzugter Ausführungsbeispiele der Erfindung anhand der Figuren näher dargestellt. Es zeigt:
- Fig. 1: eine perspektivische Ansicht einer Schelle zum Befestigen eines rohr- oder schlauchförmigen Gegenstands mit einem Clipelement,
- Fig. 2: eine vergrößerte perspektivische Ansicht eines Ausführungsbeispiels eines Clipelements mit u-förmigem Umgriff und
- Fig. 3: eine perspektivische Ansicht eines alternativen, nicht von den Ansprüchen abgedeckten Ausführungsbeispiels eines Clipelements.

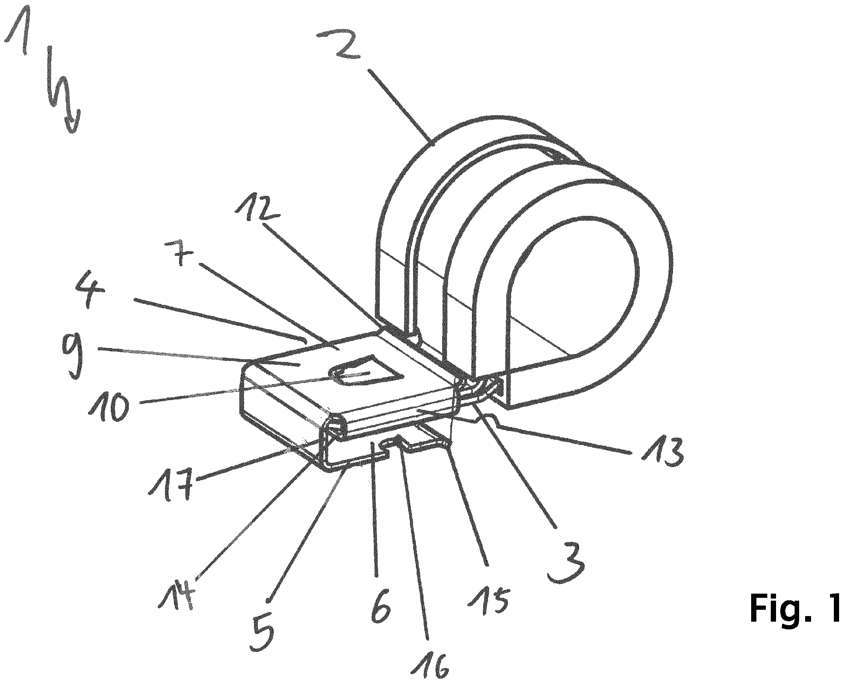

Figur 1 zeigt in perspektivischer Ansicht eine Schelle 1 zum Befestigen eines rohr- oder schlauchförmigen Gegenstands mit einem Clipelement 4. Die Schelle 1 weist ein Schellenband 2 und ein Schenkelpaar 3 auf, wobei das Clipelement 4 über einen Rastmechanismus mit dem in einem Aufnahmeabschnitt 7 des Clipelements 4 aufgenommen Schenkelpaar 3 verrastet ist. Das Clipelement 4 ist als einteiliges, gebogenes Bauteil aufgeführt und weist beispielsweise ein metallisches Material wie zum Beispiel Federstahl auf. Das Clipelement hat neben dem Aufnahmeabschnitt 7 einen Befestigungsabschnitt 5, der zum Befestigen der Schelle an einem Element dient. Der Aufnahmeabschnitt 7 umschließt dabei das Schenkelpaar 3 im Wesentlichen vollständig, sodass das Clipelement 4 formschlüssig mit der Schelle 1 verbunden ist.

Der Aufnahmeabschnitt 7 weist eine Grundfläche 9 auf, aus der zur besseren Fixierung des Clipelements 4 am Schenkelpaar 3 ein Rasthaken 10 ausgeklappt ist. Der Rasthaken 10 kann mit einer nicht gezeigten Ausnehmung im Schenkelpaar 3 einen Rastmechanismus bilden. An zwei Seiten der Grundfläche 9 des Aufnahmeabschnitts 7 schließen sich außerdem Führungselemente 13 an. Diese bilden zusammen mit der Grundfläche 9 einen Aufnahmeraum 8, in den das Schenkelpaar 3 eingeführt wird, wobei die Führungselemente 13 des in Figur 1 gezeigten Ausführungsbeispiels rechtwinklig in Richtung des Aufnahmeraums 8 umgebogene freie Enden 14 aufweisen. Die Grundfläche 9 geht im Bereich der Öffnung des Aufnahmeraums 8 in ein erstes Zungenelement 12 über, welches in einer dem Aufnahmeraum 8 entgegengesetzte Richtung umgebogen ist und somit die Öffnung vergrößert. Hierdurch wird ein Einführen des Schenkelpaares 3 erleichtert.

An den Aufnahmeabschnitt 7 des Clipelements 4 schließt sich ein Befestigungsabschnitt 5 an, welcher dazu dient, die Schelle 1 an einem nicht dargestellten Element zu befestigen. Der Befestigungsabschnitt 5 und der Aufnahmeabschnitt 7 sind nach dem in Figur 1 gezeigten Beispiel in einer solchen Weise u-förmig umgebogen, dass sie im Wesentlichen parallel nebeneinander angeordnet sind. Der Befestigungsabschnitt 5 weist einen Befestigungsraum 6 mit einem zweiten Zungenelement 15 sowie mindestens eine Lasche 16 auf. Nach dem gezeigten Beispiel befinden sich zwei Laschen 16 am Befestigungsabschnitt 5, von denen jedoch nur eine Lasche 16 erkennbar ist. Die Laschen 16 sind an zwei gegenüberliegenden Längsseiten der Grundfläche des Befestigungsabschnitts 5 angeordnet. Durch die längsseitige Anordnung der Laschen 16 wird gewährleistet, dass das Clipelement 4 sich am zumindest teilweise in den Befestigungsraum eingeführten Element gehalten wird, weil der Befestigungsraum 6 nun mit Ausnahme seiner Öffnung in alle Richtungen begrenzt wird, nämlich durch die Grundfläche des Befestigungsabschnitts 5, durch die seitlich angeordneten Laschen 16 sowie durch den u-förmigen Umgriff und in einer der Grundfläche entgegengesetzten Richtung durch die umgebogenen freien Enden 14 des Aufnahmeabschnitts 7. Analog zum ersten Zungenelement 12 beim Aufnahmeraum 8 dient das zweite Zungenelement 15 im Falle des Befestigungsraums 6 zur Vergrößerung der Öffnung, wodurch das Einführen des Elements erleichtert wird.

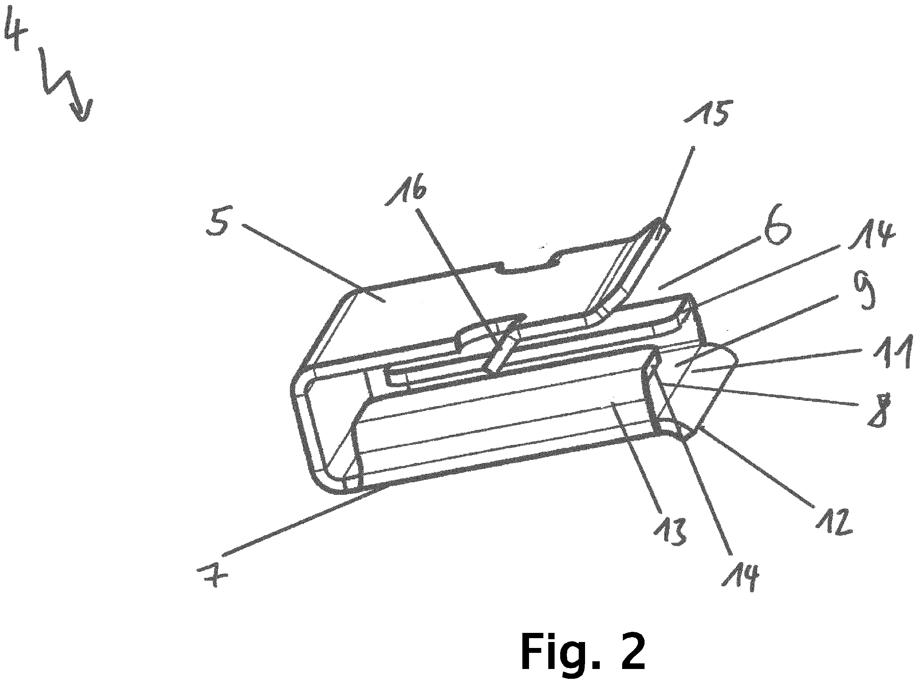

Figur 2 zeigt in vergrößerter perspektivischer Ansicht das Ausführungsbeispiel eines Clipelements 4 aus Figur 1. Eine Schelle 1 wird in Figur 2 nicht gezeigt. Das Clipelement 4 weist einen Aufnahmeabschnitt 7 mit einem Aufnahmeraum 8 sowie einen Befestigungsabschnitt 5 mit einem Befestigungsraum 6 auf. Wird das Schenkelpaar 3 in den Aufnahmeraum 8 eingeführt, verrastet der Rasthaken 10 mit dem Schenkelpaar 3, wodurch das Clipelement 4 an der Schelle 1 fixiert ist und das Clipelement 4 die Schenkel des Schenkelpaares aneinanderdrückt. Dadurch wird die Schelle in einem geschlossenen Zustand gesichert. Der Aufnahmeabschnitt 7 weist außerdem ein umgebogenes erstes Zungenelement 12 sowie seitliche Führungselemente 7 mit umgebogenen freien Enden 14 auf, mit deren Hilfe das Schenkelpaar 3 zum Rasthaken 10 geführt wird. Darüber hinaus dienen die Führungselemente 7 dazu, das Schenkelpaar 3 formschlüssig zu positionieren.

Figur 2 zeigt weiterhin die an den Längsseiten der Grundfläche des Befestigungsabschnitts 5 ausgebildeten Laschen 16. Diese ragen in den Befestigungsraum 6 hinein und dienen der Befestigung des Clipelements 4 an einem Element, wobei das Element zumindest teilweise in den Befestigungsraum 6 eingeführt wird. Dabei fungieren die Laschen 16 als Rast- oder Klemmmittel und halten das Clipelement 4 kraft- und/oder formschlüssig am Element. Auch der Befestigungsraum 6 weist im Bereich seiner Öffnung ein Zungenelement 15 auf. Dieses zweite Zungenelement 15 sorgt für ein einfaches Anbringen des Clipelements 4 an einem Element.

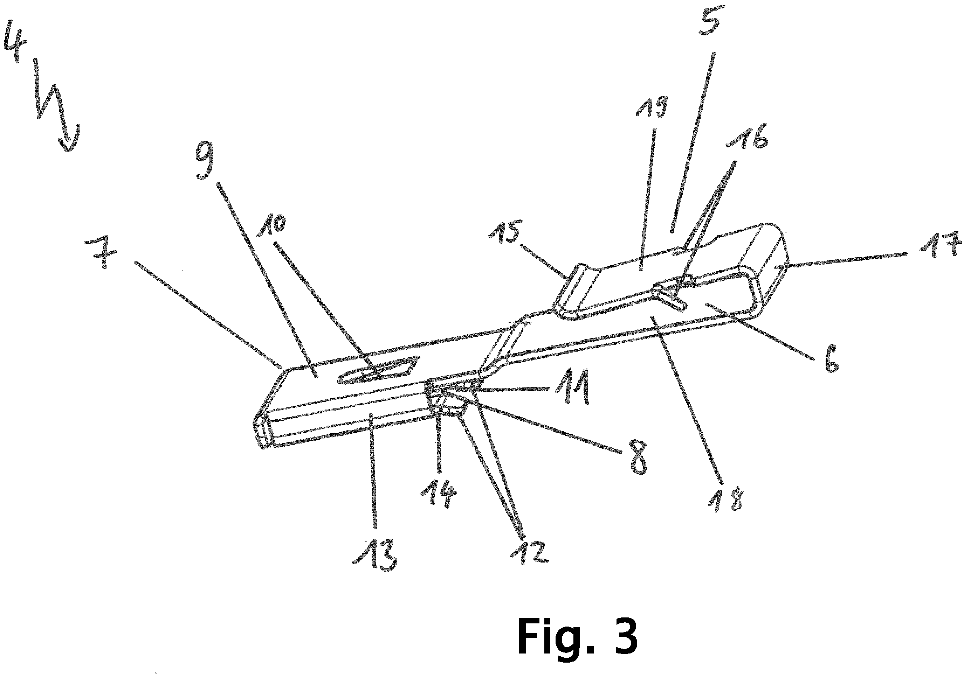

Figur 3 zeigt in perspektivischer Ansicht ein alternatives, nicht von den Ansprüchen abgedecktes Ausführungsbeispiel eines Clipelements 4, bei dem zwischen dem Aufnahmeabschnitt 7 und dem Befestigungsabschnitt 5 keine u-förmige Umformung vorgesehen ist. Allerdings weist das gezeigte Ausführungsbeispiel im Übergangsbereich vom Aufnahmeabschnitt 7 zum Befestigungsabschnitt 5 eine s-förmige Biegung auf, wodurch die Grundfläche 9 des Aufnahmeabschnitts 7 und die Grundfläche des Befestigungsabschnitts 5 nicht exakt in einer Ebene liegen, sondern zueinander leicht versetzt sind. Das Clipelement 4 weist dabei einen Befestigungsabschnitt 5 mit einem u-förmigem Umgriff 17 auf, wobei der Befestigungsabschnitt 5 einen Grundschenkel 18 und einen Außenschenkel 19 ausbildet. Der Grundschenkel 18 und der Außenschenkel 19 begrenzen den Befestigungsraum 6. Dabei verlaufen der Grundschenkel 18 und der Außenschenkel 19 nicht exakt parallel zueinander. Vielmehr nimmt der Abstand zwischen dem Grundschenkel 18 und dem Außenschenke 19 in Richtung der Öffnung des Befestigungsraums 6 ab. Dadurch wird eine mögliche Klemmwirkung des Befestigungsabschnitts 5 erhöht.

Das erste Zungenelement 12 des Aufnahmeabschnitts 7 der Ausführungsform gemäß Figur 3 wird durch die umgebogenen freien Enden 14 der Führungselemente gebildet.

Die Erfindung beschränkt sich in ihrer Ausführung nicht auf die vorstehend beschriebenen bevorzugten Beispiele. Vielmehr ist eine Anzahl von Varianten denkbar, welche von den dargestellten Lösungen auch bei andersartigen Ausführungen Gebrauch machen.

### Bezugszeichenliste

- 1: Schelle
- 2: Schellenband
- 3: Schenkelpaar
- 4: Clipelement
- 5: Befestigungsabschnitt
- 6: Befestigungsraum
- 7: Aufnahmeabschnitt
- 8: Aufnahmeraum
- 9: Grundfläche
- 10: Rasthaken
- 11: Einführungsöffnung
- 12: erstes Zungenelement
- 13: Führungselemente
- 14: freie Enden
- 15: zweites Zungenelement
- 16: Lasche
- 17: u-förmiger Umgriff
- 18: Grundschenkel
- 19: Außenschenkel

## Patentansprüche

1. Schelle (1) zum Befestigen eines rohr- oder schlauchförmigen Gegenstands, mit einem Schellenband (2), das an seinem ersten Ende einen ersten Schenkel und an seinem zweiten Ende einen zweiten Schenkel aufweist, wobei die Schenkel im verspannten Zustand des Schellenbandes (2) aneinander liegen und ein Schenkelpaar (3) bilden, wobei die Schelle (1) ein Clipelement (4) mit einem Aufnahmeabschnitt (7) aufweist, in welchen das Schenkelpaar (3) im verspannten Zustand des Schellenbandes (2) einführbar ist, wobei das Clipelement (4) im Aufnahmeabschnitt (7) mit dem Schenkelpaar (3) verrastbar ist, wobei das Clipelement (4) einen Befestigungsabschnitt (5) mit einem Befestigungsraum (6) zum Befestigen der Schelle an einem Element aufweist und dass der Aufnahmeabschnitt (7) einen Aufnahmeraum (8) zum Aufnehmen des Schenkelpaares (3) aufweist, wobei der Aufnahmeabschnitt (7) des Clipelements () eine Grundfläche (9), einen Rasthaken (10) und eine Einführungsöffnung (11) aufweist, wobei an den Längsseiten der Grundfläche (9) des Aufnahmeabschnitts (7) Führungselemente (13) ausgebildet sind, **dadurch gekennzeichnet, dass**
die Führungselemente (13) freie Enden (14) aufweisen, welche derart rechtwinklig umgebogen sind, dass sie zueinander zeigen, wobei die Führungselemente (13) mit den freien Enden (14) und der Grundfläche (9) des Aufnahmeabschnitts (7) den Aufnahmeraum (8) ausbilden und,
dass der Befestigungsraum (6) zwischen der Grundfläche (9) des Befestigungsabschnitts (5) und den freien Enden (14) der Führungselemente (13) des Aufnahmeabschnitts (8) ausgebildet ist.

2. Schelle (1) nach Anspruch 1, **dadurch gekennzeichnet, dass** der Rasthaken (10) in den Aufnahmeraum (8) gerichtet ist und insbesondere ein erstes Zungenelement (12) vom Aufnahmeraum (8) weg gerichtet ist.

3. Schelle (1) nach einem der vorhergehenden Ansprüche, **dadurch gekennzeichnet, dass** der Befestigungsabschnitt (5) des Clipelements (4) mindestens eine Lasche (16) und insbesondere ein zweites Zungenelement (15) aufweist.

4. Schelle (1) nach Anspruch 3, **dadurch gekennzeichnet, dass** die mindestens eine Lasche (16) in Richtung des Befestigungsraums (6) gerichtet ist und das zweite Zungenelement (15) gegebenenfalls in eine vom Befestigungsraum (6) weg zeigende Richtung gerichtet ist.

5. Schelle (1) nach einem der vorhergehenden Ansprüche, **dadurch gekennzeichnet, dass** das Clipelement (4) zwischen dem Befestigungsabschnitt (5) und dem Aufnahmeabschnitt (7) derart u-förmig gebogen ist, dass der Befestigungsabschnitt (5) und der Aufnahmeabschnitt (7) im Wesentlichen parallel nebeneinander angeordnet sind.

6. Schelle (1) nach einem der vorhergehenden Ansprüche , **dadurch gekennzeichnet, dass** die mindestens eine Lasche (16) an der Grundfläche (9) des Befestigungsabschnitts (5) angeordnet ist.

7. Schelle (1) nach einem der vorhergehenden Ansprüche , **dadurch gekennzeichnet, dass** der Befestigungsabschnitt (5) des Clipelements (4) als u-förmiger Umgriff (17) mit einem Grundschenkel (18) und einem Außenschenkel (19) ausgebildet ist.

8. Schelle (1) nach Anspruch 7, **dadurch gekennzeichnet, dass** der Befestigungsraum (6) durch den Außenschenkel (19) und den Grundschenkel (18) gebildet ist.

9. Schelle (1) nach Anspruch einem der Ansprüche 7 oder 8, **dadurch gekennzeichnet, dass** der Grundschenkel (18) und der Außenschenkel (19) im Bereich der Befestigungsöffnung näher beieinander liegen als im Bereich des u-förmigen Umgriffs (17).

10. Schelle (1) nach einem der Ansprüche 4 bis 9, **dadurch gekennzeichnet, dass** die mindestens eine Lasche (16) am Außenschenkel (19) des Befestigungsabschnitts (5) angeordnet ist.

## Claims

1. Clip (1) for fastening a pipe-shaped or tube-shaped object, comprising a clip band (2) which on the first end thereof has a first leg and on the second end thereof has a second leg, wherein when the clip band (2) is in the clamped state the legs lie against one another and form a leg pair (3); wherein the clip (1) has a clip element (4) having a receiving portion (7) into which the leg pair (3) is insertable when the clip band (2) is in the clamped state; wherein the clip element (4) is able to be latched to the leg pair (3) in the receiving portion (7); wherein the clip element (4) has a fastening portion (5) having a fastening space (6) for fastening the clip to an element, and that the receiving portion (7) has a receiving space (8) for receiving the leg pair (3); wherein the receiving portion (7) of the clip element () has a base area (9), a latching hook (10) and an insertion opening (11), wherein guide elements (13) are configured on the longitudinal sides of the base area (9) of the receiving portion (7), **characterized in that** the guide elements (13) have free ends (14) which are bent at right angles in such a manner as to point towards one another; wherein the guide elements (13) by way of the free ends (14) and the base area (9) of the receiving portion (7) form the receiving space (8), and **in that** the fastening space (6) is configured between the base area (9) of the fastening portion (5) and the free ends (14) of the guide elements (13) of the receiving portion (8).

2. Clip (1) according to Claim 1, **characterized in that** the latching hook (10) is directed into the receiving space (8), and in particular a first tongue element (12) is directed away from the receiving space (8).

3. Clip (1) according to either of the preceding claims, **characterized in that** the fastening portion (5) of the clip element (4) has at least one tab (16) and in particular a second tongue element (15).

4. Clip (1) according to Claim 3, **characterized in that** the at least one tab (16) is directed in the direction of the fastening space (6), and the second tongue element (15), where applicable, is directed in a direction pointing away from the fastening space (6).

5. Clip (1) according to one of the preceding claims, **characterized in that** the clip element (4) between the fastening portion (5) and the receiving portion (7) is bent in a U-shaped manner such that the fastening portion (5) and the receiving portion (7) are disposed so as to be substantially parallel next to one another.

6. Clip (1) according to one of the preceding claims, **characterized in that** the at least one tab (16) is disposed on the base area (9) of the fastening portion (5).

7. Clip (1) according to one of the preceding claims, **characterized in that** the fastening portion (5) of the clip element (4) is configured as a U-shaped surround (17) having a base leg (18) and an outer leg (19) .

8. Clip (1) according to Claim 7, **characterized in that** the fastening space (6) is formed by the outer leg (19) and the base leg (18).

9. Clip (1) according to either of Claims 7 and 8, **characterized in that** the base leg (18) and the outer leg (19) in the region of the fastening opening lie closer together than in the region of the U-shaped surround (17).

10. Clip (1) according to one of Claims 4 to 9, **characterized in that** the at least one tab (16) is disposed on the outer leg (19) of the fastening portion (5).

## Revendications

1. Collier de serrage (1) pour la fixation d'un objet en forme de tube ou de tuyau, avec une bande de collier de serrage (2) qui présente à sa première extrémité une première branche et à sa deuxième extrémité une deuxième branche, les branches s'appliquant l'une contre l'autre à l'état tendu de la bande de collier de serrage (2) et formant une paire de branches (3), le collier de serrage (1) présentant un élément de clipsage (4) avec une section de réception (7) dans laquelle la paire de branches (3) peut être introduite à l'état tendu de la bande de collier de serrage (2), l'élément de clipsage (4) pouvant être encliqueté avec la paire de branches (3) dans la section de réception (7), l'élément de clipsage (4) présentant une section de fixation (5) avec un espace de fixation (6) pour fixer le collier de serrage à un élément et la section de réception (7) présentant un espace de réception (8) pour recevoir la paire de branches (3), la section de réception (7) de l'élément de clipsage () présentant une surface de base (9), un crochet d'encliquetage (10) et une ouverture d'introduction (11), des éléments de guidage (13) étant formés sur les côtés longitudinaux de la surface de base (9) de la section de réception (7), **caractérisé en ce que** les éléments de guidage (13) présentent des extrémités libres (14) qui sont repliées à angle droit de telle sorte qu'elles sont orientées l'une vers l'autre, les éléments de guidage (13) formant l'espace de réception (8) avec les extrémités libres (14) et la surface de base (9) de la section de réception (7), et
**en ce que** l'espace de fixation (6) est formé entre la surface de base (9) de la section de fixation (5) et les extrémités libres (14) des éléments de guidage (13) de la section de réception (8).

2. Collier de serrage (1) selon la revendication 1, **caractérisé en ce que** le crochet d'encliquetage (10) est dirigé vers l'espace de réception (8) et, notamment, un premier élément de languette (12) est dirigé à l'opposé de l'espace de réception (8).

3. Collier de serrage (1) selon l'une quelconque des revendications précédentes, **caractérisé en ce que** la section de fixation (5) de l'élément de clipsage (4) présente au moins une patte (16) et notamment un deuxième élément de languette (15).

4. Collier de serrage (1) selon la revendication 3, **caractérisé en ce que** l'au moins une patte (16) est dirigée en direction de l'espace de fixation (6) et le deuxième élément de languette (15) est éventuellement dirigé dans une direction orientée à l'opposé de l'espace de fixation (6).

5. Collier de serrage (1) selon l'une quelconque des revendications précédentes, **caractérisé en ce que** l'élément de clipsage (4) est plié en forme de U entre la section de fixation (5) et la section de réception (7) de telle sorte que la section de fixation (5) et la section de réception (7) sont agencées essentiellement parallèlement l'une à côté de l'autre.

6. Collier de serrage (1) selon l'une quelconque des revendications précédentes, **caractérisé en ce que** l'au moins une patte (16) est agencée sur la surface de base (9) de la section de fixation (5).

7. Collier de serrage (1) selon l'une quelconque des revendications précédentes, **caractérisé en ce que** la section de fixation (5) de l'élément de clipsage (4) est réalisée sous la forme d'un entourage en forme de U (17) avec une branche de base (18) et une branche extérieure (19) .

8. Collier de serrage (1) selon la revendication 7, **caractérisé en ce que** l'espace de fixation (6) est formé par la branche extérieure (19) et la branche de base (18) .

9. Collier de serrage (1) selon l'une quelconque des revendications 7 ou 8, **caractérisé en ce que** la branche de base (18) et la branche extérieure (19) sont plus proches l'une de l'autre dans la zone de l'ouverture de fixation que dans la zone de l'entourage en forme de U (17) .

10. Collier de serrage (1) selon l'une quelconque des revendications 4 à 9, **caractérisé en ce que** l'au moins une patte (16) est agencée sur la branche extérieure (19) de la section de fixation (5).
